# EUROPEAN PATENT SPECIFICATION

(11) **EP 2 633 984 B1**
(45) Date of publication and mention of the grant of the patent: **23.01.2019**
(21) Application number: 11835960.3
(22) Date of filing: 13.09.2011
(51) Int. Cl.: B29D 30/06, B29D 30/48, B29C 43/22, B29C 47/88, B29D 30/44

(54) **MOLDING DEVICE AND MOLDING METHOD FOR TIRE COMPONENT**
FORMVORRICHTUNG UND FORMVERFAHREN FÜR EINE REIFENKOMPONENTE
DISPOSITIF DE MOULAGE ET PROCÉDÉ DE MOULAGE POUR COMPOSANT DE PNEU

(30) Priority: 27.10.2010 JP 2010241239
(43) Date of publication of application: 04.09.2013
(73) Proprietor: Bridgestone Corporation, Tokyo 104-8340 (JP)
(72) Inventor: KIMIYA, Yosuke, Kodaira-shi Tokyo 187-8531 (JP); TAKIZAWA, Jun, Kodaira-shi Tokyo 187-8531 (JP)
(74) Representative: Lamb, Martin John Carstairs
(86) International application number: PCT/JP2011/070830
(87) International publication number: WO 2012/056820

(56) References cited:
- EP-A1- 2 239 130
- WO-A1-02/078939
- WO-A1-2006/028018
- WO-A1-2010/007937
- JP-A- 4 355 121
- JP-A- 9 029 856
- JP-A- 2003 320 543
- JP-A- 2010 076 218
- US-E- R E25 349

## Description

### Technical Field

The present invention relates to a molding device for a tire component and to a molding method for a tire component.

### Background Art

When manufacturing a tire, it is performed that a kneaded rubber material is extruded in a belt form through a mouthpiece of a rubber extruder and the extruded belt-shaped member, for example, a belt-shaped rubber is wound, for example, around a molding drum to mold an unvulcanized tire.

In the extrusion process of the belt-shaped rubber, conventionally, a sheet of belt-shaped rubber having a wide width is extruded and molded, and is wound in a wind around a tire molding drum to mold a tire. The molding method is advantageous in that the number of processes can be decreased. However, lower noise and improvement in uniformity for tires have also been required along with the improvement in the stillness technology of automobiles themselves. Accordingly, in place of the conventional wide-width belt-shaped rubber in which a minute step caused by joining is generated at the end part of the belt-shaped rubber in the manufacturing, a manufacturing method (a ribbon manufacturing method), in which a narrow-width belt-shaped rubber is extruded from a rubber extruder through a mouthpiece and is wound continuously on a tire molding drum, is adopted partly (see Patent Literature 1) .

Incidentally, at the mouthpiece part that works as an exit when extruding and molding the belt-shaped rubber in a rubber extruder, the belt-shaped rubber has high temperature and changes the shape such that the belt-shaped rubber swells or shrinks to result in an unstable shape. Therefore, continuous molding of a belt-shaped rubber having a constant shape is difficult. Accordingly, in order to stabilize the shape of the belt-shaped rubber, it is generally performed to roll and mold the belt-shaped rubber after the belt-shaped rubber is extruded from a rubber extruder.

In a conventional extruder of a belt-shaped rubber, the belt-shaped rubber is extruded, for example, from a trapezoidal mouthpiece and the extruded belt-shaped rubber is rolled with a roller head composed of a vertical pair of rollers to be thin-gauged. However, the end part of the belt-shaped rubber is shaped with an obtuse angle during the process of being thin-gauged. The belt-shaped rubber with thin-gauged and with an obtuse angle at the end part is, for example when molding a bead filler, sent forth with the lower roller of the roller head, wound around a lamination board, and closely touched to a foundation or the lamination board by attaching a stitcher to the end part of the wound belt-shaped rubber to grind the end part.

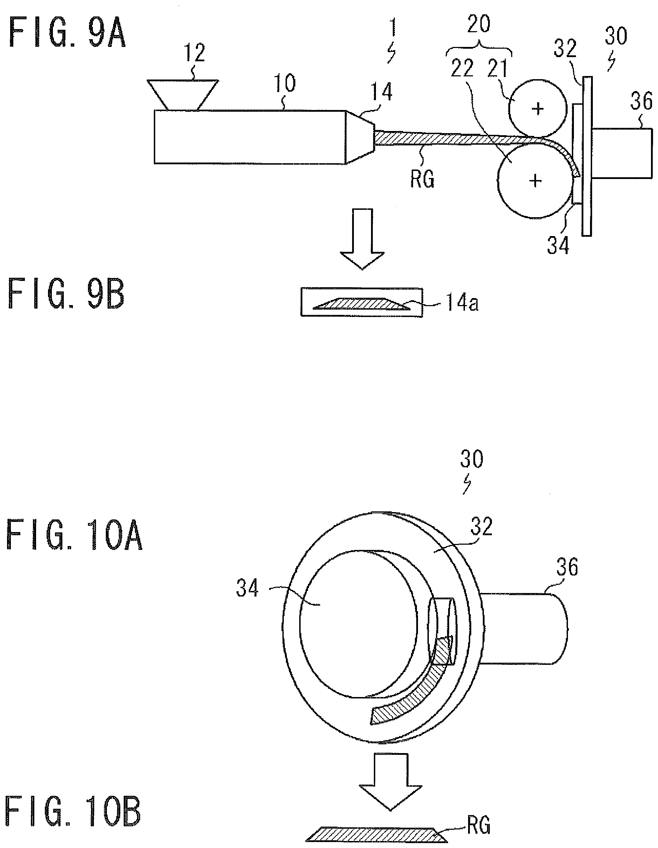

Fig. 9 is a drawing schematically showing a conventional molding device that molds a bead filler, but it is not one described in the Patent Literature. Fig. 9A is a side view thereof, and Fig. 9B is a drawing showing the shape of the opening of the mouthpiece in Fig. 9A.

This molding device 1 of a bead filler is composed of a rubber extruder 10 composed of a hopper 12 for introducing raw material rubber etc. into a rubber extruder 10 and a mouthpiece part 14, a roller head 20 for rolling an extruded belt-shaped rubber (also referred to as a ribbon rubber) RG, and a bead filler molding machine 30 provided with a lamination board (a molding disc) 32 to wind and laminate the belt-shaped rubber RG.

The rubber extruder 10 is a known one and is provided, in the inside thereof, with a screw for kneading and conveying the raw material rubber etc. introduced from the hopper 12 and a gear pump for extruding the kneaded and conveyed raw material rubber in increments of a constant amount, and with the mouthpiece part 14 having a mouthpiece 14a at the exit side from which the kneaded rubber is extruded in increments of the constant amount. The mouthpiece 14a has a cross-section of a trapezoidal shape as shown in Fig. 9B (meanwhile, the mouthpiece having a cross-section of a hexagonal shape is also used).

The roller head 20 is provided with a pair of rollers, that is, an upper roller 21 and a lower roller 22, an adjustment mechanism (not shown) for adjusting a gap between the upper and lower rollers 21, 22 in order to adjust the thickness (gauge) of the belt-shaped rubber RG during the rolling, and a drive mechanism (not shown) for rotationally driving the upper and lower rollers 21, 22.

Fig. 10A is a perspective view of the bead filler molding machine 30. The bead filler molding machine 30 is composed of a lamination board 32 that functions as a plane for laminating the belt-shaped rubber RG, a cylindrical part 34 provided at the central part of the lamination board 32 for winding the belt-shaped rubber RG rolled between the upper and lower rollers 21, 22, and a drive unit 36 for rotating the lamination board 32. Fig. 10B is a cross-sectional view of the belt-shaped rubber RG that is wound and laminated around the lamination board 32 of the bead filler molding machine 30.

In the above configuration, the belt-shaped rubber RG is extruded from the trapezoidal (or hexagonal) mouthpiece 14a of the rubber extruder 10, subsequently, rolled between the upper and lower rollers 21, 22 of the roller head 20, and, subsequently, disposed on the surface of the lamination board 32 of the rotating bead filler molding machine 30 and wound around the cylindrical part 34 (Fig. 10A). Here, the cross-sectional shape of the belt-shaped rubber RG is trapezoidal as shown in Fig. 10B.

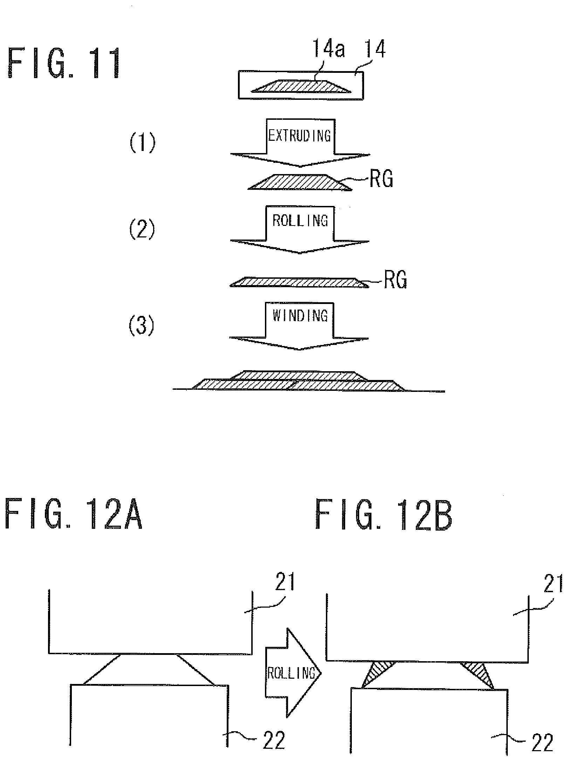

Fig. 11 is a drawing schematically showing a series of molding processes of the belt-shaped rubber RG described hereinbefore. That is, the kneaded rubber material is extruded from the mouthpiece 14a of the mouthpiece part 14 of the rubber extruder 10 (Fig. 11(1)), subsequently, rolled with the upper and lower rollers 21, 22 (Fig. 11(2)). The rolled belt-shaped rubber RG is wound around the lamination board 32 (Fig. 11(3)).

Fig 12 shows a state where the belt-shaped rubber having been extruded during the extrusion process in Fig. 11(1) is rolled during the rolling process in Fig. 11(2), that is, it shows a change in the cross-section of the belt-shaped rubber RG between before and after the rolling.

That is, before the rolling, as shown in the drawing, both end parts of the trapezoid have acute angles according to the cross-sectional shape of the mouthpiece (Fig. 12A). However, the cross-sectional shape is deformed during the subsequent step of the rolling between the pair of rollers 21, 22 of the roller head 20, and, when comparing cross-sectional shapes of the belt-shaped rubber between before and after the rolling, the shape is a trapezoid in the same manner but the angle of the end part has been made into an obtuse angle (see Fig. 12B) .

Here, the reason why the end part of the belt-shaped rubber RG is made to have an obtuse angle is that, since the cross-sectional shape of the belt-shaped rubber RG having been extruded from the mouthpiece 14a is the trapezoid, and the upper and lower sides thereof are evenly flat, the upper side and the lower side adhere closely to the upper and lower rollers 21, 22 during the process of being sandwiched and rolled between the upper and lower rollers 21, 22. Therefore, rubber that has lost a place to go flows over free oblique sides to make the oblique sides form obtuse angles. In Fig. 12B, the parts of which the rubber is flown down into the oblique sides are shown with hatching.

When the belt-shaped rubber RG having the end part with the obtuse angles is laminated, a problem occurs in which uneven portions of the surface of the laminated tire component are degraded due to the shape of the end part. Accordingly, when the above-described belt-shaped rubber RG is used as an intermediate material, there is such a problem that the uneven portions of the surface brings about air intrusion in the inside to cause a molding of a tire having a defective appearance when the belt-shaped rubber RG is applied to a top or side portion.

In addition, when the belt-shaped rubber RG with the trapezoidal (or hexagonal) cross-section, that is, with a flat lower face is used, the belt-shaped rubber RG is rolled between the upper and lower rollers 21, 22 to make the lower face of the belt-shaped rubber RG flatter. Therefore, even though the end part of the belt-shaped rubber RG is compressed with the stitcher in a state of being laminated on a foundation, the belt-shaped rubber RG does not move due to contacting closely to the foundation, accordingly, an improvement effect for the uneven portions at the end part cannot be obtained contrary to expectations after the lamination.

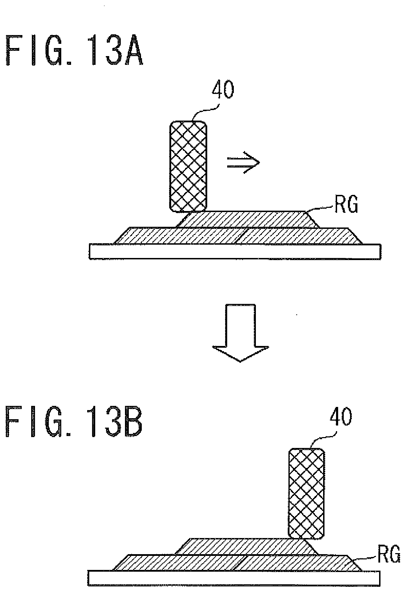

Fig. 13 is a cross-sectional view that shows the state where the belt-shaped rubber RG having the end part shaped the obtuse angle is stitched after being laminated.

Fig. 13A shows a state before stitching with a stitcher 40, and Fig. 13B shows a state after stitching. Fig. 13B shows that, in the belt-shaped rubber RG having the end part shaped the obtuse angle, even though after stitching, the end part, that is, a projecting part of the upper end part of the belt-shaped rubber with a trapezoidal cross-section shown in the drawing example cannot sufficiently be ground, so that a step relative to the foundation is left, and a grinding effect cannot be obtained so as not to suppress the uneven portions.

Accordingly, in the case where a belt-shaped rubber is molded by the conventional ribbon manufacturing methods, uneven portions between members are generated in a part where belt-shaped rubbers overlap each other to lead to anxiety of a defect caused by air intrusion in the uneven portion in a subsequent process or a defective external appearance due to the uneven portions. Therefore, a molding resulting in less uneven portions is expected.

As a method for the purpose, there is such a technique as making a belt-shaped rubber thinner than a prescribed value in rolling. However, when a rubber made thin at such a level is used, the belt-shaped rubber would be cut or becomes undulated deformation, so that many processes are required for the tuning thereof. Therefore, the method cannot be sufficient as a solution.
US RE25 349 E12 and WO2006/028018 disclose devices for molding tire components.

### Citation List

### Patent Literature

PTL 1: Japanese Patent Laid-Open No. 2006-231533

### Summary of Invention

### Technical Problem

The present invention is achieved in order to solve the conventional problem. The purpose thereof is, for a belt-shaped member for molding a tire component, to make it possible to suppress a form collapse during the speed-up/rolling process of the extruded belt-shaped member, to make the edge part of the belt-shaped member not be rounded but as sharp as an angle targeted in the mouthpiece shape, and, thereby, not to allow uneven portions between members to occur in a part where the belt-shaped members overlap each other when the belt-shaped members are laminated to mold a tire component, and not to result in a defect caused by air intrusion in the uneven portions in subsequent processes and a defective appearance due to the uneven portions.

### Solution to Problem

(1) The present invention is a molding device for molding a tire component including: an extruder of a rubber material provided with a mouthpiece with a rhombic cross-section; and a pair of rollers for rolling a belt-shaped member with a rhombic cross-section extruded through the mouthpiece into a hexagonal cross-section; the molding device molding the tire component by laminating the belt-shaped member with the hexagonal cross-section, wherein the pair of rollers roll the belt-shaped member with the rhombic cross-section so as to have the hexagonal cross-section having, after the rolling, a ratio between distance a and width b (a/b) of 0.73 or less where the distance a is from the center line to a side part in a width direction of the belt-shaped member and the width b is from the center line to an edge part in the width direction thereof; and a ratio between width c and thickness d (c/d) of 2.98 or more where the width c is of the side part and the thickness d is from the center to a surface in a thickness direction at the central part of the belt-shaped member.
(2) The present invention is the molding device for a tire component described in the above (1), wherein the lamination is performed by lifting an edge part in the width direction of the belt-shaped member with the hexagonal cross-section from a foundation.
(3) The present invention is the molding device for a tire component described in the above (1) or (2), wherein the tire component is a bead filler, further including: a lamination board for laminating and disposing the belt-shaped member, and a stitcher for stitching the belt-shaped member laminated and disposed on the lamination board.
(4) The present invention is a molding method for a tire component including the steps of: extruding a belt-shaped member with a rhombic cross-section from an extruder of a rubber material; rolling the extruded belt-shaped member with the rhombic cross-section so as to have a hexagonal cross-section; and laminating the belt-shaped member rolled so as to have the hexagonal cross-section to mold the tire component, wherein the belt-shaped member rolled so as to have the hexagonal cross-section has, after the rolling, a ratio between distance a and width b (a/b) of 0.73 or less where the distance a is from the center line to a side part in a width direction of the belt-shaped member and the width b is from the center line to an edge part in the width direction thereof; and a ratio between width c and thickness d (c/d) of 2.98 or more where the width c is of the side part and the thickness d is from the center to a surface in a thickness direction at the central part of the belt-shaped member.
(5) The present invention is the molding method for a tire component described in the above (4), wherein the step for molding the tire component has a step for laminating the belt-shaped member rolled so as to have the hexagonal cross-section while lifting an edge part in the width direction from a foundation.
(6) The present invention is the molding method for a tire component described in the above (4) or (5), wherein the tire component is a bead filler, further including the steps of: laminating and disposing the belt-shaped member rolled so as to have the hexagonal cross-section on a lamination board, and stitching the laminated belt-shaped member.

### Advantageous Effects of Invention

According to the present invention, it is possible to suppress a form collapse in the speed-up/rolling process of the extruded belt-shaped member, to make the edge part of the belt-shaped member not be rounded but as sharp as an angle targeted in the mouthpiece shape, and, therefore, to improve the generation of uneven portions on the tire surface due to the laminated belt-shaped member, and to prevent air intrusion in the applied place and an appearance defect after the molding.

### Brief Description of Drawings

Fig. 1 is a drawing schematically showing a molding device for molding the bead filler according to the embodiment of the present invention. Fig. 1A is a side view thereof, and Fig. 1B is a drawing showing the cross-sectional shape of the opening part of the mouthpiece in Fig. 1A.
Fig. 2A is a perspective view of the bead filler molding device, and Fig. 2B is a cross-sectional view of a belt-shaped rubber to be the bead filler.
Fig. 3 is a drawing schematically showing a series of molding processes of the belt-shaped rubber in the bead filler molding device.
Fig. 4 is a drawing schematically showing the state of the change in the cross-sectional shape of the belt-shaped rubber in the rolling process in Fig. 3.
Fig. 5 is a drawing showing the state of the belt-shaped rubber having passed through the rolling process.
Fig. 6 is a cross-sectional view showing the stitching process after the lamination of the belt-shaped rubber.
Figs. 7A to 7D are tables comparing a belt-shaped rubber extrusion-molded with a conventional mouthpiece, the belt-shaped rubber according to the embodiment of the present invention, and a case where a mouthpiece of a comparative example is used.
Fig. 8 shows enlarged views of edge parts of bead fillers after lamination and stitching, by the conventional belt-shaped rubber and the belt-shaped rubber according to the embodiment of the present invention shown in Fig. 7.
Fig. 9 is a drawing schematically showing a conventional molding device for molding a bead filler, in which Fig. 9A is the side view thereof and Fig. 9B is a drawing showing the shape of the opening part of the mouthpiece in Fig. 9A.
Fig. 10A is a perspective view of a conventional bead filler molding device, and Fig. 10B is a cross-sectional view of a belt-shaped rubber to be a bead filler.
Fig. 11 is a drawing schematically showing a series of molding processes of a belt-shaped rubber in a conventional molding device of a bead filler.
Fig. 12 is a drawing showing a rolling process in a conventional molding device of a bead filler.
Fig. 13 is a cross-sectional view showing a stitching process after laminating a conventional belt-shaped rubber.

### Description of Embodiments

An embodiment of the molding device for a tire component of the present invention is described while referring to accompanied drawings.

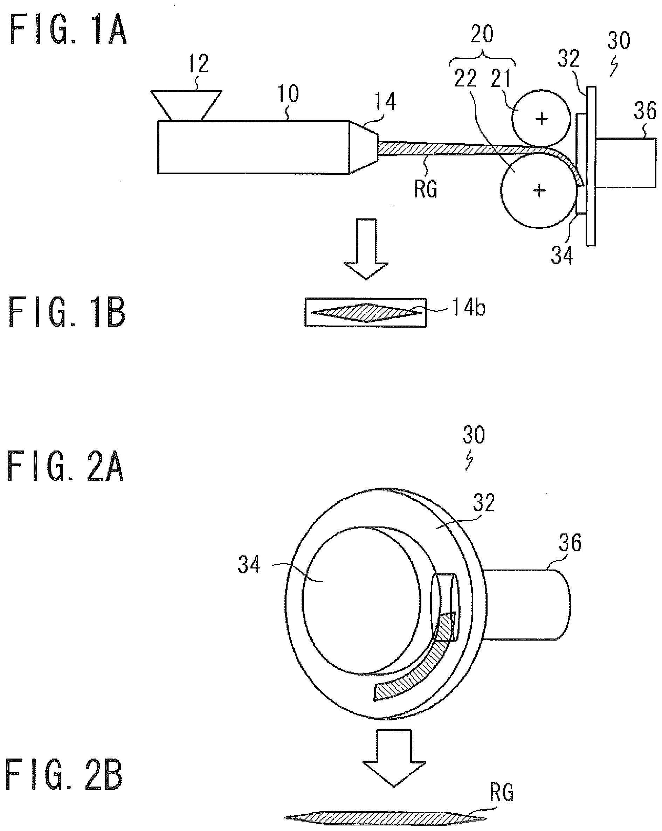

Fig. 1 is a drawing schematically showing a molding device for molding a bead filler as a tire component, in which Fig. 1A is a side view thereof, and Fig. 1B is a drawing showing a cross-sectional shape of an opening part of the mouthpiece in Fig. 1A. Fig. 2A is a perspective view of the bead filler molding device, and Fig. 2B is a cross-sectional view of a belt-shaped member (a belt-shaped rubber).

The molding device of a bead filler shown in Fig. 1A is the same as conventional one having already been described, except that, as shown in Fig. 1B, the shape of the mouthpiece 14b thereof is rhombus. Accordingly, in Figs. 1 and 2, the same reference signs as those in Figs. 9 and 10 are given and the description is omitted.

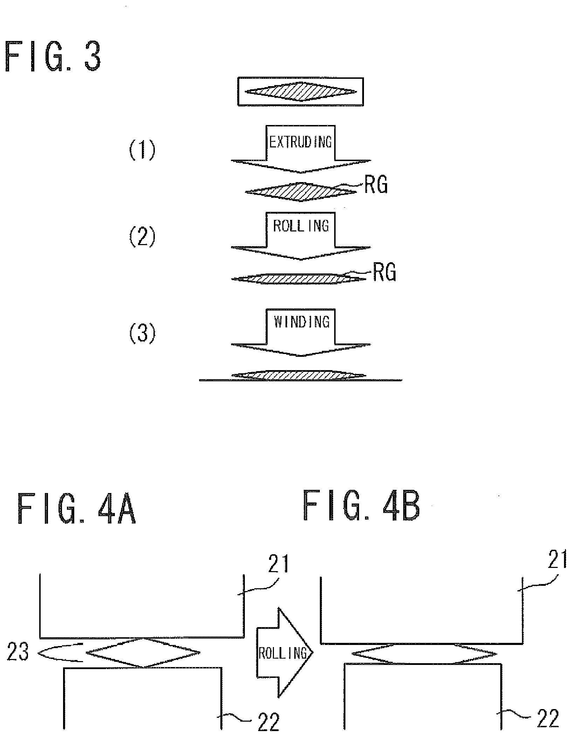

Fig. 3 is a drawing schematically showing a series of molding processes of the belt-shaped rubber RG in the bead filler molding device. Fig. 4 is a drawing showing roughly the state where the cross-sectional shape thereof changes from rhombic to hexagonal in the rolling process of the belt-shaped rubber RG shown in Fig. 3(1).

Here, although a series of molding processes of the belt-shaped rubber RG are also the same as those having already been described for Fig. 11, the processes are different from those shown in Fig. 11 in that, here, the mouthpiece 14b is rhombic and, therefore, the cross-section of the extruded belt-shaped rubber RG is also rhombic.

That is, in the embodiment, the belt-shaped rubber RG before the rolling has a rhombic cross-section, that is, has not flat upper and lower surfaces, and, therefore, during a process in which the belt-shaped rubber RG is inserted between a pair of, that is, upper and lower rollers 21, 22 to be rolled so as to have a hexagonal cross-section, the upper side and lower side do not adhere closely to the upper and lower rollers 21, 22, different from conventional cases. In addition, as shown in Fig. 4, rubber having flown out in the rolling process flows into gaps 23 between the belt-shaped rubber RG and the upper and lower rollers 21, 22, and does not flow to the front edge side of the side part or flows, if it flows, in a very small amount. Therefore, the edge part of the belt-shaped rubber in the width direction having been rolled so as to have the hexagonal cross-section is not shaped to have an obtuse angle.

Accordingly, as the result of forming the cross-section of the belt-shaped rubber RG before the rolling in the rhombic shape, the generation of the uneven portions on the tire surface and air intrusion caused by the laminated belt-shaped rubber, and the defective external appearance after the molding are suppressed greatly, as compared with conventional belt-shaped rubbers RG having a trapezoidal or hexagonal cross-sectional shape before the rolling.

However, in the above-described embodiment, when the aspect ratio (horizontal to vertical ratio) of the rhombic cross-section of the belt-shaped rubber RG is made large, the rhombic cross-sectional shape of the belt-shaped rubber RG nears a flat. Therefore, the cross-section thereof is furthermore made flat in the rolling process, and, as the cross-section becomes flatter, the angle of the edge part is likely to be an obtuse angle, and, when the belt-shaped rubber RG is laminated on a foundation, it becomes difficult to lift both side edge parts 42 thereof from the foundation. Problems that occur when the angle becomes obtuse have already been described. Further, when both edge parts 42 of the belt-shaped rubber RG can not be lifted from the foundation, the laminated belt-shaped rubber is not extended even when the stitching is performed with a stitcher not to enable the grinding effect to be obtained. Therefore, the improvement of the uneven portions of the edge part of the belt-shaped rubber RG is hardly obtained.

This problem may be solved by focusing attention on the relation between the grinding effect which is obtained when laminating the cross-section in the rhombic shape of the belt-shaped rubber RG and edge parts on both sides of the belt-shaped rubber RG on the foundation and stitching is performed with the stitcher 40 and the improvement effect for the uneven portions at the edge part of the belt-shaped rubber RG, and by specifying a cross-section shape in which the above-described effects are substantially obtained.

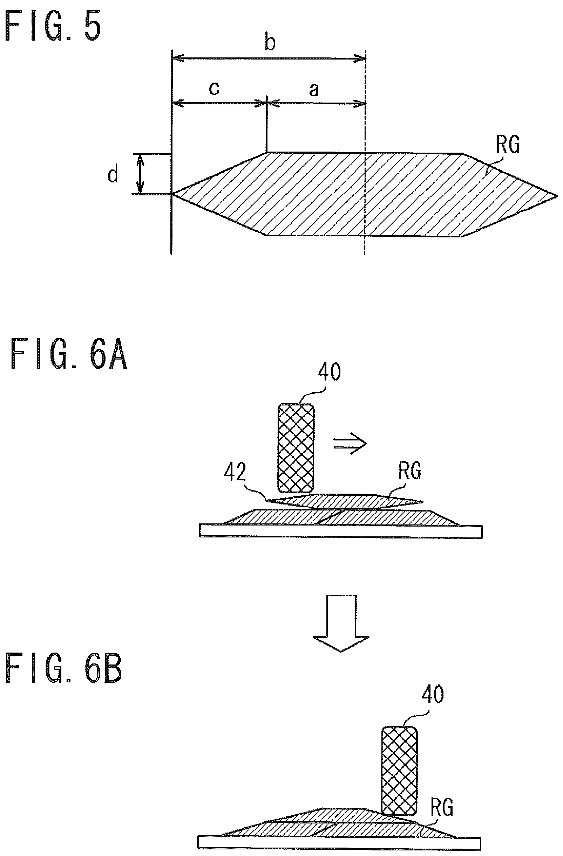

That is, here, as shown in Fig. 5, attention was focused on a ratio between distance a and width b (a/b) where the distance a is from the center line to the inclined side part in the width direction of the belt-shaped rubber RG, and the width b is from the center line to the edge part in the width direction thereof; and a ratio between width c and thickness d (c/d) where the width c is of the side part and the thickness d is from the center line to the surface in the thickness direction at the center of the belt-shaped rubber. That is, the aspect ratio of the side part, each seen in the hexagonal cross-section of the belt-shaped rubber after the rolling, and the relation between these values and the grinding effect by a stitcher was checked by the experiment. Then, it is known that the effect is remarkable when the above (a/b) is 0.73 or less and the aspect ratio of the side part (c/d) is 2.98 or more.

If the ratio (a/b) between the distance a from the center line to the side part in the width direction of the belt-shaped rubber RG and the width b from the center line to the edge part in the width direction exceeds 0.73, the phenomenon in which the angle of the edge part would be rounded, that is, the angle would become obtuse due to the flow of rolled rubber into the edge part of the belt-shaped rubber RG in the rolling becomes not negligible. If the ratio (c/d) between the width c of the side part and the thickness d from the center line to the surface in the thickness direction at the center part of the belt-shaped rubber RG is less than 2.98, the angle at the edge part also would become obtuse. In this case, a good effect described above would hardly be obtained.

By defining the cross-section of the belt-shaped rubber RG after the rolling as described above, the edge part 42 in the width direction of the belt-shaped rubber directly after the lamination can intentionally be lifted from the foundation to improve the grinding effect by the stitcher 40. Therefore, the uneven portions in wound parts due to the winding of the belt-shaped rubber RG are improved satisfactorily to enable the lamination with a stable surface shape to be performed. Consequently, it is possible to improve the generation of the uneven portions on a tire surface caused by the laminated belt-shaped rubber RG, and to prevent surely air intrusion at applied places and a defective external appearance after the molding.

Fig. 6 is a cross-sectional view showing the state where the belt-shaped rubber RG disposed on the lamination board 32 according to the embodiment is used as a foundation and the belt-shaped rubber RG is laminated on it, and, in the state, stitching is performed with the stitcher 40. In the embodiment, as shown in Fig. 6A, the edge part 42 of the belt-shaped rubber RG with a rhombic cross-section is lifted from the foundation, therefore, by grinding the edge part 42 by stitching, the edge part adheres closely to the foundation as shown in Fig. 6B to form a smooth slope and the uneven portions can be improved, as compared with conventional one shown in Fig. 13B.

### Example

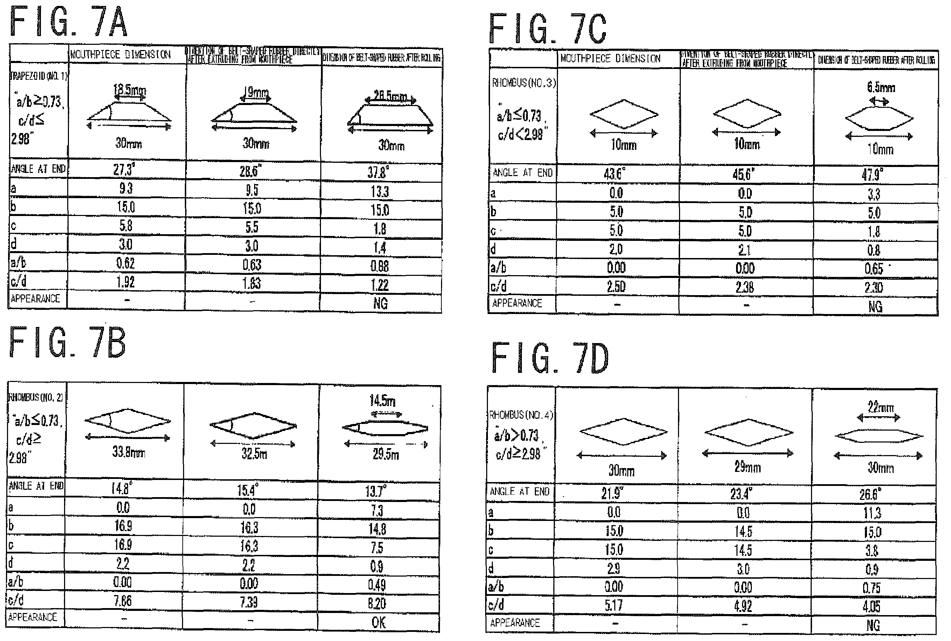

Figs. 7A to 7D are tables showing collectively, respectively, regarding the case where the conventional mouthpiece 14a with a trapezoidal cross-section is used, the case where the mouthpiece 14b with a rhombic cross-section of the present invention is used and the case where a mouthpiece (a/b > 0.73, c/d < 2.98) of a comparative example is used, dimensions of mouthpieces, dimensions of belt-shaped rubbers directly after extrusion from mouthpieces, dimensions of belt-shaped rubbers after rolling, etc.

That is, Fig. 7A shows the case where a conventional mouthpiece 14a with a trapezoidal cross-section (a/b ≥ 0.73, c/d ≤ 2.98) is used. Here, the upper side: 18.5 mm, the lower side (whole width) : 30 mm, edge angle: 27.3°, in sizes referring to a to d shown in Fig. 5, when a = 9.3 mm, b = 15.0 mm, c = 5.8 mm, d = 3.0 mm, a/b = 0.62, c/d = 1.92, dimensions of a belt-shaped rubber directly after extrusion with the mouthpiece 14a were as follows. Angle of the end: 28.6°, a = 9.5 mm, b = 15.0 mm, c = 5.5 mm, d = 3.0 mm, a/b = 0.63, c/d = 1.83. And, dimensions of the belt-shaped rubber after the rolling were as follows. Angle of the end: 37.8°, a = 13.3 mm, b = 15.0 mm, c = 1.8 mm, d = 1.4 mm, a/b = 0.88, c/d = 1.22. The external appearance thereof was rejectable (NG).

Fig. 7B shows the case where the mouthpiece (a/b ≤ 0.73, c/d ≥ 2.98) that is a product obtained by practicing the present invention was used.

Here, when the upper side: 0 mm, the whole width: 33.8 mm, the angle at the end: 14.8°, a = 0.0 mm, b = 16.9 mm, c = 16.9 mm, d = 2.2 mm, a/b = 0.00, and c/d = 7.86, the dimensions of the belt-shaped rubber just after the extrusion with the mouthpiece 14b were as follows. Angle at the end: 15.4°, a = 0.0 mm, b = 16.3 mm, c = 16.3 mm, d = 2.2 mm, a/b = 0.00, c/d = 7.39. And, the dimensions of the belt-shaped rubber after the rolling were as follows. Angle at the end part: 13.7°, a = 7.3 mm, b = 14.8 mm, c = 7.5 mm, d = 0.9 mm, a/b = 0.49, c/d = 8.20. In addition, the external appearance thereof was acceptable (OK).

Fig. 7C shows the case where a mouthpiece (a/b ≤ 0.73, c/d < 2.98) that is a first comparative product for the present invention was used.

Here, when the upper side: 0 mm, the whole width: 10 mm, the angle at the end: 43.6°, a = 0.0 mm, b = 5.0 mm, c = 5.0 mm, d = 2.0 mm, a/b = 0.00 and c/d = 2.50, dimensions of the belt-shaped rubber directly after the extrusion with the mouthpiece were as follows. Angle at the end: 45.6°, a = 0.0 mm, b = 5.0 mm, c = 5.0 mm, d = 2.1 mm, a/b = 0.00, c/d = 2.38. Dimensions of the belt-shaped rubber after the rolling were as follows. Angle at the end: 47.9°, a = 3.3 mm, b = 5.0 mm, c = 1.8 mm, d = 0.8 mm, a/b = 0.65, c/d = 2.30. The external appearance thereof was rejectable (NG).

Fig. 7D shows the case where a mouthpiece (a/b > 0.73, c/d ≥ 2.98) that is a second comparative product for the present invention was used.

Here, when the upper side: 0 mm, the whole width: 30 mm, the angle at the end: 21.9°, a = 0.0 mm, b = 15.0 mm, c = 15.0 mm, d = 2.9 mm, a/b = 0.00 and c/d = 5.17, dimensions of the belt-shaped rubber directly after the extrusion with the mouthpiece were as follows. Angle at the end: 23.4°, a = 0.0 mm, b = 14.5 mm, c = 14.5 mm, d = 3.0 mm, a/b = 0.00, c/d = 4.92. Dimensions of the belt-shaped rubber after the rolling were as follows. Angle at the end: 26.6°, a = 11.3 mm, b = 15.0 mm, c = 3.8 mm, d = 0.9 mm, a/b = 0.75, c/d = 4.05. The external appearance thereof was rejectable (NG).

From above, in the cases of conventional mouthpieces, regarding the angle at the end, it was 27.3° in the mouthpiece but was 37.8° in the belt-shaped rubber after the rolling. Therefore, the angle becomes obtuse by about 10°. Therefore, it is known that a tire with a defective external appearance may be molded.

In contrast, in the case where the rhombic mouthpiece 14b that is a product according to the present invention is used, the angle at the end of the mouthpiece with a rhombic cross-section is 14.8° and the angle at the end of the belt-shaped rubber with a rhombic cross-section directly after being extruded from the mouthpiece is 15.4°, but the angle at the end of the belt-shaped rubber after the rolling is 13.7°. Therefore, the angle at the end is made to be furthermore acute. Accordingly, it is known that no risk of the generation of a defective external appearance exists in a molded tire, different from conventional cases.

In addition, even in cases where a rhombic mouthpiece is used, as is the case for the product obtained by practicing the present invention, when at least one of a/b and c/d does not satisfy the above-mentioned numerical range, in the first comparative example, the angle at the end of the mouthpiece is 43.6°, but the angle at the end of the belt-shaped rubber directly after extrusion is 45.6° and the angle at the end after rolling is 47.9°, that is, the degree of obtuseness relative to the angle of the mouthpiece at the end is about 4°. That is, the angle becomes more obtuse, though the degree is low. In addition, in the second comparative example, too, the angle of the mouthpiece at the end is 21.9°, but, the angle at the end after rolling is 26.6°, namely, the angle becomes more obtuse in about a little less than 5°. The tendency that the angle becomes more obtuse is down by half as compared with the conventional example, but, when compared with the case of the product obtained by practicing the present invention, there is a tendency that the angle becomes more obtuse. Consequently, it is known that products in comparative examples are improved relative to the conventional product, but, nevertheless, an anxiety for the generation of a defective external appearance is higher as compared with the product obtained by practicing the present invention.

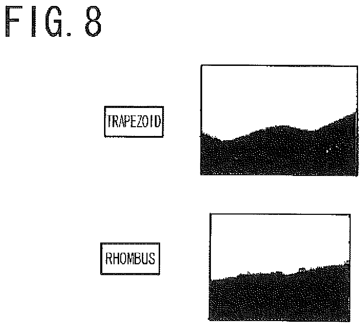

Fig. 8 shows enlarged views of edge parts of bead fillers after lamination and stitching, by the conventional belt-shaped rubber RG with a trapezoid cross-section and the belt-shaped rubber RG with a rhombic cross-section shown in Fig. 7. As shown in the drawing, when the belt-shaped rubber RG with a rhombic cross-section is used, as compared with the case where the conventional belt-shaped rubber RG with a trapezoidal cross-section is used, the uneven portion is improved. In terms of arithmetic average roughness, it is improved from 1.01 to 0.49.

Incidentally, in the above explanation of the embodiment, the tire component is explained as a bead filler. However, the belt-shaped rubber of the present invention is not limited to the case, but is applicable equally to tire components formed by using a belt-shaped rubber (ribbon rubber) such as a tread or the like. For example, a raw tire may be molded by sticking unvulcanized belt-shaped rubber onto a tire-molding drum, or by winding and laminating it on a tire-molding drum.

### Reference Signs List

1: molding device for tire component, 10: rubber extruder, 12: hopper, 14: mouthpiece part, 14a, 14b: mouthpiece, 20: roller head, 21: upper roller, 22: lower roller, 30: bead filler molding machine, 32: lamination board, 34: cylindrical part, 36: drive unit, 40: stitcher

## Claims

1. A molding device for a tire component (1) for molding a tire component comprising:
an extruder of a rubber material (10) provided with a mouthpiece (14a, 14b) with a rhombic cross-section; and
a pair of rollers (21, 22) for rolling a belt-shaped member with a rhombic cross-section extruded through the mouthpiece into a hexagonal cross-section;
the molding device molding the tire component by laminating the belt-shaped member with the hexagonal cross-section, wherein
the pair of rollers roll the belt-shaped member with the rhombic cross-section so as to have the hexagonal cross-section having, after the rolling, a ratio between distance a and width b (a/b) of 0.73 or less where the distance a is from the center line to a side part in a width direction of the belt-shaped member and the width b is from the center line to an edge part in the width direction thereof; and a ratio between width c and thickness d (c/d) of 2.98 or more where the width c is of the side part and the thickness d is from the center to a surface in a thickness direction at the central part of the belt-shaped member.

2. The molding device for a tire component according to claim 1, wherein the lamination is performed by lifting an edge part in the width direction of the belt-shaped member with the hexagonal cross-section from a foundation.

3. The molding device for a tire component according to claim 1 or 2, wherein the tire component is a bead filler; further comprising:
a lamination board (32) for laminating and disposing the belt-shaped member; and
a stitcher (40) for stitching the belt-shaped member laminated and disposed on the lamination board.

4. A molding method for a tire component comprising the steps of:
extruding a belt-shaped member with a rhombic cross-section from an extruder of a rubber material;
rolling the extruded belt-shaped member with the rhombic cross-section so as to have a hexagonal cross-section; and
laminating the belt-shaped member rolled so as to have the hexagonal cross-section to mold the tire component, wherein
the belt-shaped member rolled so as to have the hexagonal cross-section has, after the rolling, a ratio between distance a and width b (a/b) of 0.73 or less where the distance a is from the center line to a side part in a width direction of the belt-shaped member and the width b is from the center line to an edge part in the width direction thereof; and a ratio between width c and thickness d (c/d) of 2.98 or more where the width c is of the side part and the thickness d is from the center to a surface in a thickness direction at the central part of the belt-shaped member.

5. The molding method for a tire component according to claim 4, wherein the step for molding a tire component has a step for laminating the belt-shaped member rolled so as to have the hexagonal cross-section while lifting an edge part in the width direction from a foundation.

6. The molding method for a tire component according to claim 4 or 5, wherein the tire component is a bead filler, further comprising the steps of:
laminating and disposing the belt-shaped member rolled so as to have a hexagonal cross-section on a lamination board (32), and
stitching the laminated belt-shaped member.

## Patentansprüche

1. Formvorrichtung für eine Reifenkomponente (1) zum Formen einer Reifenkomponente, Folgendes beinhaltend:
einen Extruder für ein Kautschukmaterial (10), welcher mit einem Mundstück (14a, 14b) mit einer rhombischen Querschnittsfläche versehen ist; und
ein Paar Rollen (21, 22) zum Rollen eines gürtelförmigen Gliedes mit einer rhombischen Querschnittsfläche, welches durch das Mundstück extrudiert wurde, zu einer hexagonalen Querschnittsfläche;
wobei die Formvorrichtung die Reifenkomponente formt, indem das gürtelförmige Glied mit der hexagonalen Querschnittsfläche laminiert wird, wobei
das Paar Rollen das gürtelförmige Glied mit der rhombischen Querschnittsfläche so rollt, dass es die hexagonale Querschnittsfläche erhält, welche nach dem Rollen ein Verhältnis zwischen Abstand a und Breite b (a/b) von 0,73 oder darunter aufweist, wobei der Abstand a von der Mittellinie zu einem Seitenteil in einer Breitenrichtung des gürtelförmigen Gliedes reicht und die Breite b von der Mittellinie zu einem Kantenteil in der Breitenrichtung hiervon reicht; und ein Verhältnis zwischen Breite c und Dicke d (c/d) von 2,98 oder darüber aufweist, wobei die Breite c die Breite des Seitenteils ist und die Dicke d vom Mittelpunkt zu einer Oberfläche in einer Dickenrichtung am mittleren Teil des gürtelförmigen Gliedes reicht.

2. Formvorrichtung für eine Reifenkomponente nach Anspruch 1, bei welcher die Laminierung durch Anheben eines Kantenteils in der Breitenrichtung des gürtelförmigen Gliedes mit der hexagonalen Querschnittsfläche von einem Fundament erfolgt.

3. Formvorrichtung für eine Reifenkomponente nach Anspruch 1 oder 2, bei welcher die Reifenkomponente ein Wulstfüller ist; zudem Folgendes beinhaltend:
eine Laminierplatte (32) zum Laminieren und Anordnen des gürtelförmigen Gliedes; und
einen Heftapparat (40) zum Heften des auf der Laminierplatte laminierten und angeordneten gürtelförmigen Gliedes.

4. Formverfahren für eine Reifenkomponente, folgende Schritte beinhaltend:
Extrudieren eines gürtelförmigen Gliedes mit einer rhombischen Querschnittsfläche aus einem Extruder für ein Kautschukmaterial;
Rollen des extrudierten, gürtelförmigen Gliedes mit der rhombischen Querschnittsfläche, so dass es eine hexagonale Querschnittsfläche erhält; und
Laminieren des gürtelförmigen Gliedes, welches so gerollt wird, dass es die hexagonale Querschnittsfläche erhält, zum Formen der Reifenkomponente, wobei
das gürtelförmige Glied, das so gerollt wird, dass es die hexagonale Querschnittsfläche erhält, nach dem Rollen ein Verhältnis zwischen Abstand a und Breite b (a/b) von 0,73 oder darunter aufweist, wobei der Abstand a von der Mittellinie zu einem Seitenteil in einer Breitenrichtung des gürtelförmigen Gliedes reicht und die Breite b von der Mittellinie zu einem Kantenteil in der Breitenrichtung hiervon reicht; und ein Verhältnis zwischen Breite c und Dicke d (c/d) von 2,98 oder darüber aufweist, wobei die Breite c die Breite des Seitenteils ist und die Dicke d vom Mittelpunkt zu einer Oberfläche in einer Dickenrichtung am mittleren Teil des gürtelförmigen Gliedes reicht.

5. Formverfahren für eine Reifenkomponente nach Anspruch 4, bei welchem der Schritt zum Formen einer Reifenkomponente einen Schritt zum Laminieren des gürtelförmigen Gliedes, welches so gerollt wird, dass es die hexagonale Querschnittsfläche erhält, besitzt, während ein Anheben eines Kantenteils in der Breitenrichtung von einem Fundament erfolgt.

6. Formverfahren für eine Reifenkomponente nach Anspruch 4 oder 5, bei welchem die Reifenkomponente ein Wulstfüller ist; zudem folgende Schritte beinhaltend:
Laminieren und Anordnen des gürtelförmigen Gliedes, welches in der Weise gerollt wird, dass es die hexagonale Querschnittsfläche erhält, auf einer Laminierplatte (32), und
Heften des laminierten, gürtelförmigen Gliedes.

## Revendications

1. Dispositif de moulage pour un composant de pneu (1) afin de mouler un composant de pneu comprenant :
une extrudeuse d'un matériau de caoutchouc (10) dotée d'un embout (14a, 14b) avec une section transversale en losange, et
une paire de galets (21, 22) permettant d'aplatir un élément en forme de courroie avec une section transversale en losange, extrudé à travers l'embout en une section transversale hexagonale ;
le dispositif de moulage moulant le composant de pneu en stratifiant l'élément en forme de courroie avec la section transversale hexagonale, dans lequel
la paire de galets aplatit l'élément en forme de courroie avec la section transversale en losange de façon à ce que la section transversale hexagonale ait, après le roulage, un rapport entre une distance a et une largeur b (a/b) de 0,73 ou moins, où la distance a est comprise entre la ligne centrale et une partie latérale dans le sens de la largeur de l'élément en forme de courroie et la largeur b est comprise entre la ligne centrale et une partie de bord dans le sens de la largeur correspondante ; et un rapport entre la largeur c et l'épaisseur d (c/d) de 2,98 ou plus, où la largeur c est celle de la partie latérale et l'épaisseur d part du centre vers une surface dans le sens de l'épaisseur au niveau de la partie centrale de l'élément en forme de courroie.

2. Dispositif de moulage pour un composant de pneu selon la revendication 1, dans lequel la stratification est réalisée en levant une partie de bord dans le sens de la largeur de l'élément en forme de courroie avec la section transversale hexagonale depuis une base.

3. Dispositif de moulage pour un composant de pneu selon la revendication 1 ou 2, dans lequel le composant de pneu est une tringle de pneu, comprenant en outre :
une planche de stratification (32) permettant de stratifier et de disposer l'élément en forme de courroie ; et
une agrafeuse (40) permettant d'agrafer l'élément en forme de courroie stratifié et disposé sur la planche de stratification.

4. Procédé de moulage pour un composant de pneu comprenant les étapes consistant à :
extruder un élément en forme de courroie avec une section transversale en losange à partir d'une extrudeuse de matériau de caoutchouc :
aplatir l'élément en forme de courroie extrudé avec la section transversale en losange de façon à avoir une section transversale hexagonale ; et
stratifier l'élément en forme de courroie aplati de façon à avoir la section transversale hexagonale pour mouler le composant de pneu, dans lequel
l'élément en forme de courroie aplati de façon à avoir la section transversale hexagonale a, après le roulage, un rapport entre la distance a et la largeur b (a/b) de 0,73 ou moins, où la distance a est comprise entre la ligne centrale et une partie latérale dans le sens de la largeur de l'élément en forme de courroie et la largeur b est comprise entre la ligne centrale et une partie de bord dans le sens de la largeur de celui-ci; et un rapport entre la largeur c et l'épaisseur d (c/d) de 2,98 ou plus, où la largeur c est celle de la partie latérale et l'épaisseur d part du centre vers une surface dans un sens de l'épaisseur au niveau de la partie centrale de l'élément en forme de courroie.

5. Procédé de moulage pour un composant de pneu selon la revendication 4, dans lequel l'étape pour le moulage d'un composant de pneu a une étape permettant de stratifier l'élément en forme de courroie aplati de façon à obtenir la section transversale hexagonale tout en levant une partie de bord dans le sens de la largeur depuis une fondation.

6. Procédé de moulage pour un composant de pneu selon la revendication 4 ou 5, dans lequel le composant de pneu est une tringle de pneu, comprenant en outre les étapes consistant à :
stratifier et disposer l'élément en forme de courroie aplati de façon à avoir une section transversale hexagonale sur une planche de stratification (32) et
agrafer l'élément en forme de courroie stratifié.
